# FASCICULE DE BREVET EUROPEEN

(11) **EP 3 856 482 B1**
(45) Date de publication et mention de la délivrance du brevet: **10.08.2022**
(21) Numéro de dépôt: 19795252.6
(22) Date de dépôt: 16.09.2019
(51) Int. Cl.: B29C 49/42, B29C 49/06, B29C 49/36, B29K 67/00, B29L 31/00

(54) **INSTALLATION DE FABRICATION DE CORPS CREUX COMPORTANT UN ORGANE DE REGULATION DE LA CIRCULATION DES CORPS CREUX MU PAR UN MOTEUR ELECTRIQUE LINEAIRE**
VORRICHTUNG ZUR HERSTELLUNG VON HOHLKÖRPERN MIT EINEM ELEMENT ZUR STEUERUNG DER STRÖMUNG VON HOHLKÖRPERN, DIE VON EINEM ELEKTRISCHEN LINEARMOTOR ANGETRIEBEN WERDEN
FACILITY FOR MANUFACTURING HOLLOW BODIES COMPRISING A MEMBER FOR CONTROLLING THE FLOW OF HOLLOW BODIES DRIVEN BY A LINEAR ELECTRIC MOTOR

(30) Priorité: 27.09.2018 FR 1858855
(43) Date de publication de la demande: 04.08.2021
(73) Titulaire: Sidel Participations, 76930 Octeville-sur-Mer (FR)
(72) Inventeur: PASQUIER, Hervé, 76930 Octeville-Sur-Mer (FR); SOUFFES, Denis, 76930 Octeville-Sur-Mer (FR)
(74) Mandataire: Sidel Group
(86) Numéro de dépôt international: PCT/FR2019/052147
(87) Numéro de publication internationale: WO 2020/065174

(56) Documents cités:
- EP-A1- 1 591 226
- WO-A2-2009/103927
- AT-B- 412 542
- US-A1- 2017 136 499
- US-A1- 2018 015 657

## Description

### DOMAINE TECHNIQUE DE L'INVENTION

L'invention concerne une installation de fabrication de récipients par formage de préformes en matériau thermoplastique, les récipients et les préformes étant désignés par le terme général "corps creux", l'installation comportant :
- des moyens de transport des corps creux en file le long d'un trajet de production déterminé ;
- au moins un organe de régulation de la circulation des corps creux monté coulissant entre une position inactive dans laquelle l'organe de régulation est escamoté en dehors du trajet de production, et une position active dans laquelle l'organe de régulation est interposé dans le trajet de production.

Des installations de fabrication de récipients selon l'art antérieur, et des procédés de commande associés sont décrits dans les documents US2018/015657A1, US2017/136499A1, AT412542B, WO2009/103927A2 et EP1591226A1.

### ARRIERE PLAN TECHNIQUE DE L'INVENTION

L'installation de fabrication comporte plusieurs stations de traitement parmi lesquelles une station de chauffage et une station de formage.

La station de chauffage permet, lors d'une étape préalable de chauffage, de rendre malléable le corps de la préforme par chauffage au-delà d'une température de transition vitreuse.

Ensuite, la préforme ainsi chauffée est placée dans un moule de la station de formage qui présente une empreinte de moulage conforme au récipient à obtenir. Un fluide sous pression, tel que de l'air, est alors injecté dans le corps malléable de la préforme afin d'en plaquer la paroi contre l'empreinte du moule.

A l'entrée de l'installation de fabrication, les préformes sont alignées et redressées en une file. Les préformes ainsi alignées sont stockées debout dans une file d'accumulation avant d'être prises en charge individuellement par des organes de maintien individuel qui permettent leur transport le long d'un trajet de fabrication. Les organes de maintien individuel appartiennent à des dispositifs de transport.

Les corps creux circulent ainsi d'une station de traitement à une autre, et à travers les différentes stations de traitement, en file le long d'un trajet de fabrication, passant le cas échéant d'un organe de maintien individuel à un autre.

Les organes de maintien individuel sont par exemple formés par des encoches ou des pinces agencés en périphérie de roues de transfert, ou encore par des mandrins de préhension qui sont portés par une chaîne.

Par exemple, le premier dispositif de transport agencé directement en aval de la file d'accumulation est formé par une roue de transfert comportant des encoches dont chacune reçoit individuellement une préforme.

Pour permettre une distribution individuelle d'une préforme dans chacune des encoches sans provoquer de blocage, il est connu de réguler la circulation des préformes au moyen d'un doigt de chargement qui est monté coulissant entre une position inactive dans laquelle les préformes sont autorisées à défiler vers une extrémité aval de la file d'accumulation, et une position active dans laquelle le doigt bloque le défilement de toutes les préformes dans la file d'accumulation, excepté celui de la dernière préforme qui peut ainsi glisser vers l'encoche associée de la roue à encoches.

Le doigt de chargement est généralement mu par un vérin pneumatique.

Cependant, on cherche à augmenter la capacité de production des installations de fabrication. Ceci est par exemple réalisé par une augmentation de la cadence de défilement des préformes.

Or, les vérins pneumatiques ont une durée de vie qui diminue fortement avec l'augmentation des cadences.

En outre, le temps de réponse des vérins pneumatiques ne permettent pas de commander le coulissement du doigt de chargement de manière suffisamment précise. Il en résulte des risques d'endommagement des préformes et de potentiels problèmes de blocage de la file d'accumulation.

Par ailleurs, le temps de réponse du vérin pneumatique est susceptible de s'allonger légèrement avec son vieillissement. Or, à cadence élevée, l'allongement du temps de réponse peut devenir critique.

Enfin, la course du vérin est fixée par des butées mécaniques. La course demeure généralement la même quelles que soit les dimensions des préformes à traiter. Or, les cadences de production sont généralement plus élevées lorsque les préformes présentent des dimensions relativement réduites. Cependant, le temps de réponse du vérin pneumatique, c'est-à-dire le moment compris entre l'émission de l'ordre de coulissement et le déplacement du doigt de chargement jusqu'à sa position active, demeure le même pour des préformes de format réduit circulant à cadence élevée que pour des préformes de plus grand format circulant à cadence réduite.

### BREF RESUME DE L'INVENTION

L'invention propose une installation de fabrication de récipients par formage de préformes en matériau thermoplastique, les récipients et les préformes étant désignés par le terme général "corps creux", l'installation comportant :
- des moyens de transport des corps creux en file le long d'un trajet de production déterminé ;
- au moins un organe de régulation de la circulation des corps creux monté coulissant entre une position inactive dans laquelle l'organe de régulation est escamoté en dehors du trajet de production, et une position active dans laquelle l'organe de régulation est interposé dans le trajet de production ;
caractérisé en ce que l'organe de régulation est mu en coulissement par un moteur électrique linéaire comportant un coulisseau monté coulissant dans un stator.

Selon d'autres caractéristique de l'installation de fabrication réalisée selon les enseignements de l'invention :
- le coulisseau est susceptible de coulisser entre une position extrême escamotée et une position extrême étendue, la position inactive étant réglable entre la position extrême escamotée et la position extrême étendue ;
- l'organe de régulation est porté fixe par le coulisseau du moteur électrique linéaire ;
- l'organe de régulation est un doigt de chargement qui est agencé au niveau d'un tronçon du trajet de production dans lequel les corps creux sont reçus dans une file d'accumulation pour assurer la distribution individuelle de chaque corps creux en aval à des organes de maintien individuel mobiles le long du trajet de production, le doigt de chargement en position active bloquant le défilement des corps creux qui sont situés directement en amont du doigt de chargement dans la file d'accumulation ;
- l'organe de régulation est formé par un sabre d'éjection qui est agencé au niveau d'un tronçon du trajet de production dans lequel les corps creux sont maintenus individuellement par des organes de maintien individuel montés mobiles le long du trajet de production, le sabre d'éjection présentant une rampe permettant de guider les corps creux hors du trajet de production lorsqu'il occupe sa position active.

L'invention concerne aussi un procédé de commande de l'organe de régulation réalisé selon les enseignements de l'invention, caractérisé en ce que l'installation est susceptible de recevoir des corps creux de différents formats, la position inactive étant réglée en fonction du format des corps creux entre les deux positions extrêmes pour que l'organe de régulation soit agencé à une distance de garde déterminée du trajet de production dans ladite position inactive.

Selon d'autres caractéristiques du procédé réalisé selon les enseignements de l'invention :
- la position inactive est réglée par commande du moteur électrique linéaire ;
- la position active de l'organe de régulation, formé par le doigt de chargement, est déterminée en fonction du format des corps creux pour que le doigt de chargement soit reçu tangent entre deux corps creux successifs de la file d'accumulation ;
- la vitesse de coulissement du doigt de chargement entre sa position inactive et sa position active est commandée de manière à contourner chaque corps creux à une distance inférieure ou égale à la distance de garde déterminée durant son défilement dans la file d'accumulation ;
- la position active correspond à la position extrême étendue de l'organe de régulation ;
- le moteur électrique linéaire est commandé en fonction de la vitesse de défilement des organes de maintien individuel situés directement en aval de la file d'accumulation ;
- le moteur électrique linéaire est commandé en fonction de la position et de la vitesse de défilement des organes de maintien individuel portant les corps creux.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une installation de fabrication de récipients réalisée selon les enseignements de l'invention ;
- la figure 2 est une vue de profil qui représente un corps creux sous la forme d'une préforme susceptible d'être pris en charge par l'installation de fabrication de la figure 1 ;
- la figure 3 est une vue en perspective avec écorché qui représente un moteur électrique linéaire susceptible d'être utilisé pour commander les mouvements d'organes de régulation de l'installation de la figure 1 ;
- la figure 4 est une vue en section horizontale passant au niveau des cols des corps creux qui représente un doigt de chargement en position active interposé entre deux corps creux d'une file d'accumulation de l'installation ;
- la figure 5 est une vue similaire à celle de la figure 4 dans laquelle le doigt de chargement occupe une position inactive ;
- la figure 6 est une vue en section horizontale passant au niveau des cols des corps creux qui représente un sabre d'éjection susceptible d'éjecter des corps creux d'un premier format déterminé circulant sur une roue de transfert de l'installation de fabrication ;
- la figure 7 est une vue similaire à celle de la figure 6 et à la même échelle que la figure 6 dans laquelle les corps creux présentent un deuxième format plus réduit que les corps creux de la figure 6.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations locales :
- longitudinale indiquée par la lettre "L" et dirigé selon le sens de déplacement des corps creux le long de leur trajet ;
- verticale indiquée par la lettre "V" et dirigé parallèlement à l'axe principal des corps creux ;
- transversale indiquée par la lettre "T" et dirigée orthogonalement à la direction longitudinale.

Les termes "amont" et "aval" sont utilisés en référence au sens de déplacement des corps 12 creux le long de leur trajet depuis l'amont vers l'aval.

Le terme "trajet 32 de production" se rapporte à l'espace balayé par les corps 12 creux durant leur déplacement en file à travers l'installation 10 de fabrication.

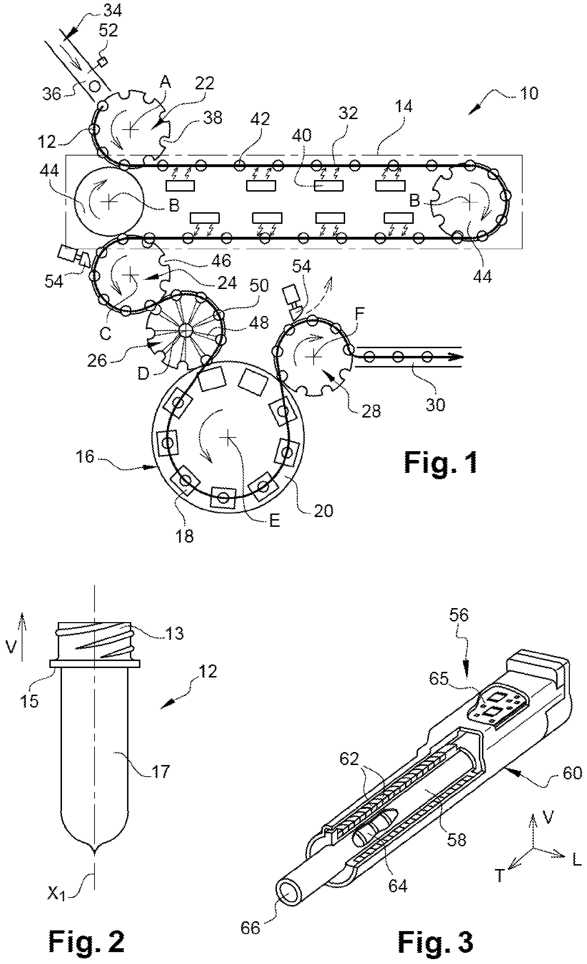

On a représenté à la figure 1 une installation 10 de fabrication de récipients par formage de préformes en matériau thermoplastique.

Dans la suite de la description, les récipients et les préformes sont indifféremment désignés par le terme général "corps 12 creux".

On a représenté à la figure 2, un corps 12 creux sous la forme d'une préforme. Un tel corps 12 creux présente une forme générale axisymétrique d'axe "X1" vertical. Le corps 12 creux comporte un col 13 supérieur. Le col 13 est destiné à conserver sa forme durant le procédé de formage. Le col 13 débouche axialement vers le bas dans un corps 17 qui présente une paroi cylindrique tubulaire dont l'axe est coaxial à l'axe "X1" principal vertical. Le corps 17 est fermé axialement vers le bas.

Le col 13 est déjà moulé à sa forme définitive. Il est pourvu sur sa face externe de moyens de fixation d'un bouchon, tel qu'un filetage ou une rainure. Une collerette 15 saillante radialement marque la séparation entre le corps 17 et le col 13.

L'installation 10 de fabrication comporte plusieurs stations de traitement des corps 12 creux. Parmi les stations de traitement équipant couramment de telles installations 10, on a ici représenté une station 14 de chauffage et une station 16 de formage munie de plusieurs unités 18 de moulage montées à la périphérie d'un carrousel 20.

On comprendra que l'installation 10 peut comporter d'autres stations de traitement qui ne sont pas représentées ici.

Les corps 12 creux sont destinés à être constamment en mouvement entre leur prise en charge individuelle, sous forme de préforme, et leur sortie sous forme de récipients final. Ceci permet d'obtenir un débit plus important de production de récipients. A cet effet, l'installation 10 comporte plusieurs dispositifs de transport des corps 12 creux.

En variante, l'invention est applicable à une installation fonctionnant de manière séquentielle.

L'installation 10 comporte une première roue 22 de transfert en entrée de la station 14 de chauffage et une deuxième roue 24 de transfert à la sortie de la station 14 de chauffage. L'installation comporte aussi une troisième roue 26 de transfert à l'entrée de la station 16 de formage et une quatrième roue 28 de transfert agencée à la sortie de la station 16 de formage pour transférer les corps 12 creux, ici les récipients finaux, vers un convoyeur 30 tel qu'un tapis ou un convoyeur à air.

Les corps 12 creux défilent dans l'installation 10 selon un trajet 32 de production déterminé qui est indiqué en trait gras à la figure 2. A cet effet, l'installation 10 comporte des moyens de transport des corps 12 creux en file le long du trajet 32 déterminé.

Les axes "X1" des corps 12 creux sont maintenus debout, dans une position dite "col en haut", durant la majorité du trajet 32 de production.

En variante, les corps 12 creux sont susceptibles d'être renversés durant le trajet 32 de production pour occuper une position "col en bas", notamment dans la station 14 de chauffage.

Les corps 12 creux arrivent ainsi, sous forme de préformes, successivement l'une après l'autre par un couloir 34 bordé par deux rails de guidage. Les corps 12 creux sont généralement libres de glisser le long du couloir 34 pour former une file 36 d'accumulation dans laquelle les corps 12 creux sont tassés les uns contre les autres. Les corps 12 creux sont par exemple suspendus en position debout entre les rails du couloir 34 par appui de la collerette 15 des corps 12 creux sur les rails. Le couloir 34 comporte au moins une portion inclinée d'amont en aval pour permettre aux corps 12 creux de la file 36 d'accumulation d'être poussés vers une extrémité aval du couloir 34, en direction de la première roue 22 de transfert.

La première roue 22 de transfert est ainsi alimentée en corps 12 creux par la file 36 d'accumulation. La première roue 22 de transfert est montée rotative autour d'un axe "A" central vertical selon un sens antihoraire en se reportant à la figure 1. La première roue 22 de transfert présente à sa périphérie plusieurs encoches de support formant chacune un organe 38 de maintien individuel d'un corps 12 creux. Les organes 38 de maintien sont ainsi embarqués sur la première roue 22 de transfert. Chaque corps 12 creux, sous forme de préforme, est ainsi distribué à un organe 38 de maintien individuel sur lequel il est maintenu debout par appui de sa collerette 15 sur le pourtour de l'encoche.

Les corps 12 creux sont convoyés depuis une extrémité aval de la file 36 d'accumulation jusqu'à une entrée de la station 14 de chauffage en suivant le trajet 32 de production. Lorsqu'un corps 12 creux a été transmis à la station 14 de chauffage, l'organe 38 de maintien poursuit son déplacement à vide le long du circuit fermé pour revenir à son point de départ et charger un nouveau corps 12 creux.

En variante non représentée de l'invention, les organes de maintien de la première roue de transfert sont formés par des pinces de préhension d'un corps creux.

Puis les corps 12 creux, toujours sous forme de préforme, sont convoyées à travers la station 14 de chauffage pour que leur corps soit chauffé préalablement aux opérations de formage, notamment par soufflage ou étirage-soufflage. A cet effet, la station 14 de chauffage est équipée de moyens 40 de chauffage, tels que des lampes halogènes ou des diodes laser, émettant un rayonnement électromagnétique pour chauffer le corps des corps 12 creux.

Chaque corps 12 creux est porté par un mandrin rotatif, également appelée tournette, qui forme un organe 42 de maintien individuel associé à la station 14 de chauffage. Un tel organe 42 de maintien comporte classiquement un mandrin (non représenté) qui est emmanché dans le col 13 d'un corps 12 creux.

Les organes 42 de maintien sont portés par une chaîne fermée qui est entraînée dans un sens horaire par des roues 44 qui sont montées rotatives autour d'axes "B" verticaux. Cette chaîne d'organes 42 de maintien mise en mouvement forme ainsi un deuxième dispositif de transport des corps 12 creux.

A la sortie de la station 14 de chauffage, les corps 12 creux, ici les préformes chaudes, sont ensuite transmis à la deuxième roue 24 de transfert qui présente une structure similaire à celle de la première roue 22 de transfert. Cette deuxième roue 24 de transfert forme un troisième dispositif de transport des corps 12 creux.

La deuxième roue 24 de transfert comporte à sa périphérie plusieurs encoches de support formant chacune un organe 46 de maintien d'un corps 12 creux. La deuxième roue 24 de transfert est montée rotative autour d'un axe "C" central vertical selon un sens antihoraire en se reportant à la figure 1.

A la sortie de la deuxième roue 24 de transfert, les corps 12 creux, ici les préformes chaudes, sont transmis à la troisième roue 26 de transfert. Cette troisième roue 26 de transfert forme un quatrième dispositif de transport des corps 12 creux.

Ainsi, la troisième roue 26 de transfert comporte à sa périphérie plusieurs bras 48. L'extrémité libre de chaque bras 48 est équipée d'une pince formant un organe 50 de maintien individuel d'un corps 12 creux. La troisième roue 26 de transfert est montée rotative autour d'un axe "D" central vertical selon un sens horaire en se reportant à la figure 1.

Les bras 50 sont susceptibles de pivoter autour d'un axe vertical par rapport au moyeu ou encore de s'étendre de manière télescopique pour permettre de faire varier l'écartement entre deux corps 12 creux dans le sens de défilement.

Les corps 12 creux sont ainsi convoyés depuis la deuxième roue 24 de transfert jusqu'à la station 16 de formage en suivant le trajet 32 de production.

Lors de leur transfert à la station 16 de formage, chaque corps 12 creux, ici sous forme de préforme chaude, est inséré dans une des unités 18 de moulage de la station 16 de formage. Les unités 18 de moulage sont entraînées en mouvement continu et régulier autour de l'axe "E" vertical du carrousel 20 selon un sens antihoraire en se reportant à la figure 1.

Durant leur formage, les corps 12 creux sont ainsi convoyés depuis la troisième roue 26 de transfert jusqu'à la quatrième roue 28 de transfert. Durant leur transport, les corps 12 creux sont transformés en récipients finaux par des moyens de formage par étirage-soufflage qui sont bien connus et qui ne seront pas décrits plus en détails par la suite.

De manière générale, une telle installation 10 de formage est susceptible de produire des récipients finaux de formats différents. Plus particulièrement, les cols 13 de tels corps 12 creux sont susceptibles de présenter un diamètre extérieur différent selon le format en cours de traitement.

A cet effet, les unités 18 de moulage équipant la station 16 de formage sont munies de moules interchangeables. Ainsi, il est possible de modifier la forme du récipient final produit. En outre, les corps 12 creux, ici sous forme de préformes, sont susceptibles de présenter des corps et/ou des cols 13 de diamètre externe différent en fonction du format de récipient final à obtenir.

Pour permettre de réguler la circulation des corps 12 creux le long de leur trajet 32 de production, l'installation 10 de fabrication comporte au moins un organe de régulation de la circulation des corps 12 creux. Un tel organe de régulation est monté coulissant entre une position inactive dans laquelle il est situé en dehors du trajet des corps creux, et une position active dans laquelle l'organe de régulation est interposé sur le trajet des corps creux. La distance entre la position inactive et la position active sera par la suite appelée "course utile" de l'organe de régulation.

De manière non limitative, l'organe de régulation est ici monté coulissant transversalement par rapport au trajet 32 de production.

L'organe de régulation est plus particulièrement utilisé pour coopérer avec un col 13 du corps 12 creux ou avec une région du corps située directement au-dessous du col 13 présentant un diamètre extérieur très proche de celui du col 13.

Comme cela sera expliqué plus en détails par la suite, un tel organe de régulation est par exemple formé par un doigt 52 de chargement qui est agencé au niveau de la file 36 d'accumulation pour cadencer la distribution des corps 12 creux en fonction de la vitesse de défilement des organes 38 de maintien.

Selon un autre exemple qui sera développé en détails par la suite, un tel organe de régulation est par exemple formé par un sabre 54 d'éjection qui est destiné à éjecter des corps 12 creux non conformes du trajet 32 de production. Un tel sabre 54 d'éjection est par exemple agencé au niveau d'une roue de transfert, entre la station 14 de chauffage et la station 16 de formage, pour éjecter des corps 12 creux, notamment des préformes, dont la température n'est pas conforme à un cahier des charges, ou encore en aval de la station 16 de formage pour éjecter des corps 12 creux, notamment des récipients finaux, présentant des défauts de formage.

Selon les enseignements de l'invention, l'organe de régulation, par exemple le doigt 52 de chargement ou le sabre 54 d'éjection, est mu en coulissement par un moteur 56 électrique linéaire. Comme cela est représenté à la figure 3, un tel moteur 56 électrique linéaire comporte un coulisseau 58 qui est monté coulissant dans un stator 60. Le stator 60 est monté fixe par rapport à une structure de l'installation 10. Ladite structure de l'installation 10 est elle-même fixe par rapport au sol.

Le coulisseau 58 présente ici une extrémité 66 libre qui est agencée à l'extérieur du stator 60. L'organe de régulation est par exemple fixé directement à l'extrémité 66 libre du coulisseau 58.

En variante non représentée de l'invention, l'extrémité 66 libre du coulisseau 58 est liée en déplacement avec l'organe de régulation par des moyens mécaniques de transmission de mouvement, tels que des leviers, des tringles et/ou des moyens d'engrènement.

Les déplacements du coulisseau 58 sont limités dans les deux sens entre une position extrême escamotée, correspondant à une position extrême escamotée de l'organe de régulation, et une position extrême étendue, correspondant à une position extrême étendue de l'organe de régulation, par des butées mécaniques (non représentées) qui ne sont généralement pas réglables. Ainsi, le coulisseau 58 peut potentiellement être commandé en coulissement le long d'une course maximale depuis l'une de ses positions extrêmes jusqu'à l'autre de ses positions extrême.

De manière générale, un tel moteur 56 linéaire électrique permet de commander aisément la position du coulisseau 58 dans une position déterminée entre ses deux positions extrêmes. De plus, un tel moteur 56 électrique linéaire permet aussi de commander à tout moment la vitesse de coulissement du coulisseau 58.

Dans l'exemple représenté à la figure 3, le coulisseau 58 se présente sous la forme d'une tige coulissant selon son axe principal. Il s'agit ici d'un axe d'orientation transversale.

Le stator 60 présente un orifice de réception du coulisseau 58 qui est entouré d'un empilement axial de bobinages 62 électriques qui sont susceptibles de créer un champ électromagnétique dans l'axe de l'orifice lorsqu'ils sont alimentés en électricité.

Le coulisseau 58 est muni d'aimants 64 permanents qui sont orientés de manière à interagir avec le champ électromagnétique des bobinages 62 pour commander le coulissement du coulisseau 58 par rapport au stator 60.

Une unité 65 électronique de commande permet de commander la position du coulisseau 58 dans le stator 60 en alimentant les bobinages 62 avec un courant électrique adapté.

Selon une variante non représentée de l'invention, le montage du moteur électrique illustré à la figure 3 est inversé. Ainsi, l'élément référencé 58 peut être fixe par rapport à la structure de l'installation, formant ainsi un stator, tandis que l'élément référencé 60 forme le coulisseau. Cette variante nécessite que l'élément 60 puisse être alimenté en courant électrique malgré son coulissement, par exemple par des fils électriques présentant une longueur suffisante pour accompagner le coulissement de l'élément 60 sur toute sa course.

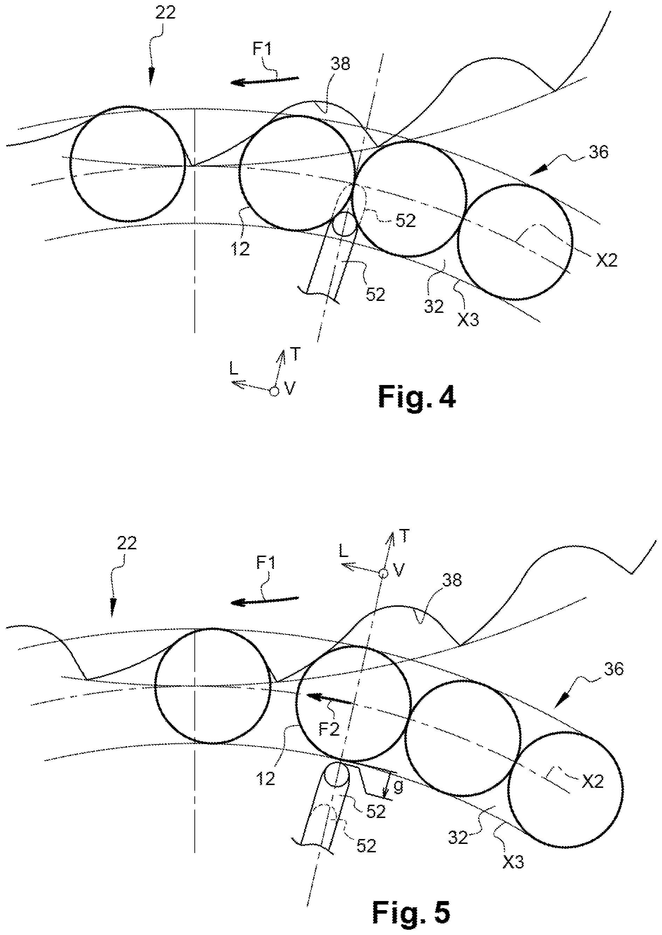

Comme expliqué précédemment, l'installation 10 de fabrication est susceptible de traiter des corps 12 creux de formats différents présentant des diamètres différents. Comme représenté aux figures 4 à 7, durant leur déplacement, les axes "X1" des corps 12 creux se déplacent selon une ligne "X2" médiane du trajet 32 de production qui est la même pour tous les formats de corps 12 creux. L'encombrement transversal de part et d'autre de cette ligne "X2" médian est en revanche susceptible de varier selon le format des corps 12 creux. Aux figures 4 à 7, l'espace balayé par les corps 12 creux du format en cours de traitement est délimité par les lignes "X3" de délimitation agencées transversalement de part et d'autre de la ligne "X2" médiane.

Avantageusement, la position inactive de l'organe de régulation est réglable entre la position extrême escamotée et la position extrême étendue de manière à réduire la course utile de l'organe de régulation au minimum en fonction du format des corps 12 creux. Plus particulièrement, la position inactive est réglée en fonction du format des corps 12 creux entre les deux positions extrêmes pour que l'organe de régulation, dans ladite position inactive, soit agencé à une distance "g" de garde déterminée, par exemple entre 1 et 2 mm, de la ligne "X3" de délimitation du trajet 32 balayé par les corps 12 creux.

La position inactive est avantageusement réglée en commandant la position du coulisseau 58 dans le stator 60 du moteur 56 électrique linéaire. Ceci permet d'effectuer un réglage extrêmement rapide et précis de la position inactive sans avoir à manipuler de butées mécaniques et sans avoir à modifier la position du stator 60.

Le réglage est par exemple effectué par l'intermédiaire d'une unité centrale de commande (non représentée) qui permet d'effectuer automatiquement plusieurs réglages de l'installation 10, dont la position inactive.

Selon un premier mode de réalisation de l'invention, l'organe de régulation est un doigt 52 de chargement qui est déplacé dans la direction de son axe principal, qui est ici d'orientation transversale. Le doigt 52 de chargement est ici fixé à l'extrémité 66 libre du coulisseau 58. Plus particulièrement, le doigt 52 de chargement est ici agencé de manière coaxiale avec le coulisseau 58.

Comme cela est représenté à la figure 1, un tel doigt 52 de chargement est généralement agencé au niveau d'un tronçon du trajet 32 de production dans lequel les corps 12 creux sont dans la file 36 d'accumulation.

Le doigt 52 de chargement est plus particulièrement destiné à être interposé sur le trajet des corps 12 creux de la file 36 d'accumulation en étant inséré dans un espace délimité entre le col 13 du dernier corps 12 creux de la file 36 d'accumulation et le col 13 du corps 12 creux directement amont lorsque lesdits corps 12 creux sont en contact l'un contre l'autre. Ceci permet d'assurer la distribution individuelle de chaque corps 12 creux en aval aux organes 38 de maintien individuel de la première roue 22 de transfert sans que les corps 12 creux précédents n'exercent de pression sur le dernier corps 12 creux lors de son entrée dans l'organe 38 de maintien formé par une encoche.

Sur les figures 4 et 5, on a représenté la file 36 d'accumulation et la roue 22 de transfert. La roue de transfert tourne dans le sens indiqué par la flèche "F1" tandis que les corps 12 creux défilent dans la file 36 d'accumulation selon le sens indiqué par la flèche "F2".

On a représenté, à la figure 4, le doigt 52 de chargement dans sa position active dans laquelle le doigt 52 de chargement est interposé dans le trajet 32 de production, entre deux cols 13 de corps 12 creux consécutifs tangents, ici sous forme de préformes. Dans cette position, le doigt 52 de chargement bloque le défilement du corps 12 creux situé directement en amont, tandis qu'il autorise le dernier corps 12 creux de la file 36 d'accumulation, situé directement en aval, à poursuivre son trajet vers la roue 22 de transfert.

La file 36 d'accumulation présente ici la forme d'un arc de cercle qui est tangent à la trajectoire des organes 38 de maintien de la roue 22 de transfert. Ainsi, le dernier corps 12 creux est susceptible de poursuivre son trajet pour être embarqué par un organe 38 de maintien de la roue 22 de transfert lorsqu'il arrive en bout du couloir 34, sans subir la pression des corps 12 creux suivants.

En position active, le doigt 52 de chargement est avantageusement tangent aux deux cols 13 de deux corps 12 creux successifs. A cet effet, la position active est réglée pour s'arrêter avant d'atteindre la ligne "X2" médiane pour éviter d'écarter les deux corps 12 creux l'un de l'autre. La position active est donc réglée en fonction des dimensions du format de corps 12 creux en cours de traitement. Ceci permet notamment d'éviter que le doigt 52 de chargement n'endommage les cols 13 des corps 12 creux par un contact trop appuyé, notamment avec le corps 12 creux situé directement en amont qui devrait revenir en arrière malgré la pression des corps 12 creux précédents.

La position active est avantageusement réglée par commande de la position du coulisseau 58 du moteur 56 électrique linéaire. Ainsi, la position active du doigt 52 de chargement, représentée en traits plein à la figure 4, est susceptible d'être différente de la position extrême étendue, représentée en traits interrompus à la même figure. Ceci permet d'effectuer un réglage extrêmement rapide de la position active sans avoir à manipuler de butées mécaniques. Le réglage est par exemple effectué par l'intermédiaire d'une unité centrale de commande qui permet d'effectuer automatiquement plusieurs réglages de l'installation 10, dont la position active.

Comme cela est représenté à la figure 5, lorsque le doigt est commandé dans sa position inactive, il est agencé à une distance "g" de garde déterminée, par exemple entre 1 et 2 mm, de la ligne "X3" de délimitation du trajet 32 balayé par les corps 12 creux. Comme expliqué précédemment, la position inactive du doigt 52 de chargement, représentée en traits plein à la figure 5, est susceptible d'être différente de sa position extrême escamotée, représentée en traits interrompus à la même figure.

Ainsi, la course utile que doit effectuer le doigt 52 de chargement entre sa position inactive et sa position active est inférieure à sa course maximale disponible. En réduisant la course utile, le temps de réponse du doigt 52 de chargement est avantageusement réduit.

En outre, la vitesse de coulissement du doigt 52 de chargement entre sa position inactive et sa position active est commandée de manière à contourner chaque corps 12 creux à une distance inférieure ou égale à la distance "g" de garde déterminée durant son défilement en vis-à-vis du doigt 52 de chargement. Ainsi, l'extrémité libre du doigt 52 de chargement épouse la courbe du col 13 du corps 12 creux. Ceci participe à déduire le temps de réponse du doigt 52 de chargement. En outre cela permet de réduire l'intensité d'éventuels chocs entre le doigt 52 de chargement et le col 13 du corps 12 creux.

Pour permettre de commander efficacement le doigt 52 de chargement, le moteur 56 électrique linéaire est commandé en fonction de la vitesse de défilement des organes 38 de maintien individuel situés directement en aval de la file 36 d'accumulation. Dans le cas présent, les déplacements du doigt 52 de chargement sont synchronisés avec la vitesse de rotation de la première roue 22 de transfert. Ceci permet de libérer le déplacement du dernier corps 12 creux de la file 36 d'accumulation lorsque l'encoche 38 correspondante arrive coïncidence avec l'extrémité du couloir 34.

En outre, l'utilisation du moteur 56 électrique linéaire permet très facilement d'adapter la distribution des corps 12 creux en fonction de diverses circonstances. Il est ainsi possible de distribuer un corps 12 creux à chaque encoche 38, comme représenté aux figures, mais il est aussi possible de commander le doigt 52 de chargement pour distribuer des corps 12 creux uniquement à un organe 38 de maintien sur un nombre "n" désiré, par exemple "n = 2". Il est aussi possible, d'empêcher qu'un corps 12 creux n'atteigne un organe de maintien défectueux déterminé de l'installation ou une unité de moulage défectueuse, en adaptant la distribution des corps 12 creux par le doigt 52 de chargement.

Ainsi, l'utilisation d'un moteur 56 électrique linéaire pour commander le coulissement du doigt 52 de chargement permet d'adapter très précisément la distribution des corps 12 creux sans que cela ne requière une interruption longue de l'installation 10 de fabrication.

En outre, le temps de réponse du moteur 56 électrique linéaire demeure stable et constant à l'usage, même sur de très longues périodes. Ceci n'est pas le cas d'un vérin pneumatique qui tant à avoir un temps de réponse qui augmente avec son usure.

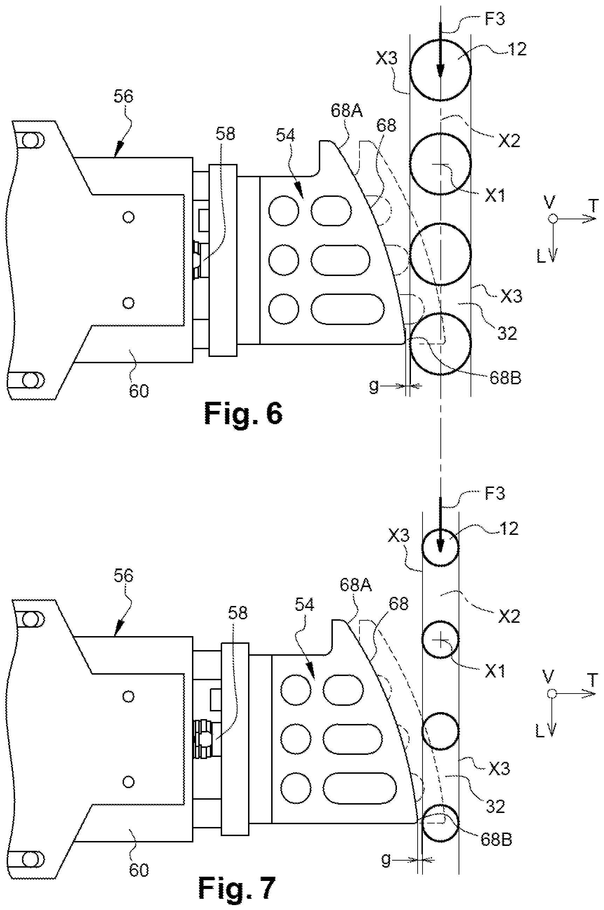

Selon un deuxième mode de réalisation représenté aux figures 6 et 7, l'organe de régulation est formé par un sabre 54 d'éjection qui est agencé dans un tronçon du trajet dans lequel les corps 12 creux sont maintenus individuellement par des organes de maintien individuel. Dans les exemples représentés à la figure 1, de tels sabres 54 d'éjection sont notamment agencé sur la deuxième roue 24 de transfert, par exemple pour éjecter des corps 12 creux, ici sous forme de préformes chaudes, présentant une température non conforme en sortie de station 14 de chauffage, et sur la quatrième roue 28 de transfert, par exemple pour éjecter un récipient présentant une qualité de formage non conforme en sortie de station 16 de formage.

Dans les exemples représentés aux figures 6 et 7, le sabre 54 d'éjection est agencé au niveau de la deuxième roue 24 de transfert. Les corps 12 creux défilent d'amont en aval selon le sens indiqué par la flèche "F3".

Comme cela est représenté aux figures 6 et 7, le sabre 54 d'éjection comporte une rampe 68 légèrement inclinée par rapport à la direction longitudinale de déplacement des corps 12 creux. La rampe s'étend entre une extrémité 68A amont et une extrémité 68B aval, l'extrémité 68A amont étant plus éloignée de la ligne "X2" médiane par rapport à l'extrémité 68B aval.

Le sabre 54 d'éjection est ici fixé directement à l'extrémité 66 libre du coulisseau 58. Le sabre 54 est ainsi monté coulissant transversalement.

Lorsqu'il occupe sa position active, le sabre 54 d'éjection est interposé sur le trajet 32 de production dans une zone dite "zone d'action" du sabre 54 d'éjection. Dans cette position active, le sabre 54 d'éjection dévie les corps 12 creux hors de leur trajet 32 et les pousse hors de l'organe 46 de maintien. Le corps 12 creux ainsi dévié de son trajet 32 de production par le sabre 54 d'éjection n'est plus maintenu par l'organe 46 de maintien, et il tombe librement dans un moyen de récupération tel qu'un bac ou un tapis roulant.

Comme cela est représenté en traits interrompu aux figures 6 et 7, dans sa position active, l'extrémité aval de la rampe 68 est agencée sensiblement au niveau de la ligne "X2" médiane du trajet 32 de production. La position de la ligne "X2" étant la même pour tout format des corps 12 creux, la position active est ici invariante. Dans ce mode de réalisation, la position active correspond par exemple à la position extrême étendue de l'organe de régulation.

Ainsi, seule la position inactive est susceptible de varier en fonction du format des corps 12 creux.

Comme représenté en traits pleins aux figures 6 et 7, dans la position inactive est déterminée de façon que l'extrémité 68B aval de la rampe 68 soit agencée à la distance "g" de garde de la ligne "X3" de délimitation du trajet 32 de production.

Comme représenté à la figure 7, lorsque les corps 12 creux présentent des dimensions inférieures à celles des corps creux de la figure 6, la ligne "X3" est décalée vers la ligne "X2" médiane. Il en résulte que la position inactive de la figure 7 est décalée de la même distance vers la ligne "X2" médiane par rapport à celle de la figure 6. Ainsi, la course utile du sabre 54 d'éjection est réduite lorsque les corps 12 creux présentent des dimensions plus réduites.

Le moteur 56 électrique linéaire est commandé en fonction de la position et de la vitesse de défilement des organes 46 de maintien individuel portant les corps 12 creux. Plus particulièrement, le moteur 56 électrique linéaire est ici commandé en fonction de la position angulaire et de la vitesse de rotation de la deuxième roue 24 de transfert. Il est commandé par une unité centrale de commande qui déclenche le coulissement du sabre 54 d'éjection depuis sa position inactive jusqu'à sa position active lorsque lorsqu'un corps 12 creux détecté comme non conforme arrive en coïncidence avec la "zone d'action" du sabre 54 d'éjection.

Le sabre 54 est à nouveau commandé dans sa position inactive aussitôt que le corps 12 creux non conforme a été éjecté afin d'éviter que des corps 12 creux conformes ne soient éjectés en trop grand nombre en même temps que le corps 12 creux non conforme. Idéalement, les dimensions de la rampe 68 sont déterminées de manière que seul le corps 12 creux non conforme soit éjecté, la vitesse de réaction du moteur 56 électrique linéaire étant suffisante pour éviter l'éjection d'autres corps 12 creux.

Bien entendu, une même installation 10 de fabrication peut comporter des organes de régulation réalisés selon l'un et/ou l'autre des modes de réalisation, comme c'est par exemple le cas de l'exemple représenté à la figure 1.

L'utilisation d'un moteur 56 électrique linéaire permet avantageusement de pouvoir commander les organes de régulation avec un temps de réponse très court et stable dans le temps.

L'utilisation du moteur 56 électrique linéaire permet en outre de maîtriser et d'adapter la longueur de la course utile de l'organe de régulation en fonction des dimensions des corps 12 creux en cours de traitement. Cela permet notamment de bénéficier d'un meilleur temps de réponse pour des corps 12 creux de dimension réduite qui circulent généralement à cadence plus élevée que les corps 12 creux de dimension plus élevée.

## Revendications

1. Installation (10) de fabrication de récipients par formage de préformes en matériau thermoplastique, les récipients et les préformes étant désignés par le terme général "corps (12) creux", l'installation (10) comportant :
- des moyens de transport des corps (12) creux en file le long d'un trajet (32) de production déterminé ;
- au moins un organe de régulation de la circulation des corps (12) creux monté coulissant entre une position inactive dans laquelle l'organe de régulation est escamoté en dehors du trajet (32) de production, et une position active dans laquelle l'organe de régulation est interposé dans le trajet (32) de production ;
**caractérisé en ce que** l'organe de régulation est mu en coulissement par un moteur (56) électrique linéaire comportant un coulisseau (58) monté coulissant dans un stator (60).

2. Installation (10) de fabrication selon la revendication précédente, **caractérisé en ce que** le coulisseau (58) est susceptible de coulisser entre une position extrême escamotée et une position extrême étendue, la position inactive étant réglable entre la position extrême escamotée et la position extrême étendue.

3. Installation (10) de fabrication selon l'une quelconque des revendications précédentes, **caractérisé en ce que** l'organe de régulation est porté fixe par le coulisseau (58) du moteur (56) électrique linéaire.

4. Installation (10) de fabrication selon l'une quelconque des revendications précédentes, **caractérisé en ce que** l'organe de régulation est un doigt (52) de chargement qui est agencé au niveau d'un tronçon du trajet (32) de production dans lequel les corps (12) creux sont reçus dans une file (36) d'accumulation pour assurer la distribution individuelle de chaque corps (12) creux en aval à des organes (38) de maintien individuel mobiles le long du trajet (32) de production, le doigt (52) de chargement en position active bloquant le défilement des corps (12) creux qui sont situés directement en amont du doigt (52) de chargement dans la file (36) d'accumulation.

5. Installation (10) de fabrication selon l'une quelconque des revendications 1 à 3, **caractérisé en ce que** l'organe de régulation est formé par un sabre (54) d'éjection qui est agencé au niveau d'un tronçon du trajet (32) de production dans lequel les corps (12) creux sont maintenus individuellement par des organes (46) de maintien individuel montés mobiles le long du trajet (32) de production, le sabre (54) d'éjection présentant une rampe (68) permettant de guider les corps creux hors du trajet (32) de production lorsqu'il occupe sa position active.

6. Procédé de commande d'une installation selon la revendication 2, **caractérisé en ce que** l'installation (10) est susceptible de recevoir des corps (12) creux de différents formats, la position inactive étant réglée en fonction du format des corps (12) creux entre les deux positions extrêmes pour que l'organe de régulation soit agencé à une distance (g) de garde déterminée du trajet (32) de production dans ladite position inactive.

7. Procédé selon la revendication précédente, **caractérisé en ce que** la position inactive est réglée par commande du moteur (56) électrique linéaire.

8. Procédé selon la revendication précédente pour la commande d'une installation selon la revendication 4, **caractérisé en ce que** la position active de l'organe de régulation, formé par le doigt (52) de chargement, est déterminée en fonction du format des corps (12) creux pour que le doigt (52) de chargement soit reçu tangent entre deux corps (12) creux successifs de la file (36) d'accumulation.

9. Procédé selon la revendication précédente, **caractérisé en ce que** la vitesse de coulissement du doigt (52) de chargement entre sa position inactive et sa position active est commandée de manière à contourner chaque corps (12) creux à une distance inférieure ou égale à la distance (g) de garde déterminée durant son défilement dans la file (36) d'accumulation.

10. Procédé selon l'une quelconque des revendications 6 ou 9, **caractérisé en ce que** la position active correspond à la position extrême étendue de l'organe de régulation.

11. Procédé selon l'une quelconque des revendications 6 à 10 pour la commande d'une installation selon la revendication 4, **caractérisé en ce que** le moteur (56) électrique linéaire est commandé en fonction de la vitesse de défilement des organes (38) de maintien individuel situés directement en aval de la file (36) d'accumulation.

12. Procédé selon l'une quelconque des revendications 6 à 10 pour la commande d'une installation selon la revendication 5, **caractérisé en ce que** le moteur (56) électrique linéaire est commandé en fonction de la position et de la vitesse de défilement des organes (48) de maintien individuel portant les corps (12) creux.

## Patentansprüche

1. Anlage (10) zur Herstellung von Behältern durch Formung von Vorformen aus thermoplastischem Material, wobei die Behälter und die Vorformen mit dem allgemeinen Begriff "Hohlkörper" (12) bezeichnet werden, wobei die Anlage (10) aufweist:
- Mittel zum Transport der Hohlkörper (12) in einer Reihe entlang eines bestimmten Produktionsweges (32);
- wenigstens ein Organ zur Regelung der Bewegung der Hohlkörper (12), das verschiebbar zwischen einer inaktiven Position, in welcher das Regelungsorgan aus dem Produktionsweg (32) hinausbewegt ist, und einer aktiven Position, in welcher das Regelungsorgan in den Produktionsweg (32) eingefügt ist, gelagert ist,
**dadurch gekennzeichnet, dass** das Regelungsorgan von einem elektrischen Linearmotor (56), der einen in einem Stator (60) verschiebbar gelagerten Schieber (58) aufweist, gleitend bewegt wird.

2. Anlage (10) zur Herstellung nach dem vorhergehenden Anspruch, **dadurch gekennzeichnet, dass** der Schieber (58) dazu eingerichtet ist, zwischen einer zurückgezogenen Endposition und einer ausgefahrenen Endposition zu gleiten, wobei die inaktive Position zwischen der zurückgezogenen Endposition und der ausgefahrenen Endposition verstellbar ist.

3. Anlage (10) zur Herstellung nach einem der vorhergehenden Ansprüche, **dadurch gekennzeichnet, dass** das Regelungsorgan von dem Schieber (58) des elektrischen Linearmotors (56) ortsfest getragen wird.

4. Anlage (10) zur Herstellung nach einem der vorhergehenden Ansprüche, **dadurch gekennzeichnet, dass** das Regelungsorgan ein Beschickungsfinger (52) ist, welcher an einem Abschnitt des Produktionsweges (32) angeordnet ist, in welchem die Hohlkörper (12) in einer Reihe (36) zur Pufferung aufgenommen werden, um die einzelne Verteilung jedes Hohlkörpers (12) stromabwärts von Einzelhalteorganen (38), die entlang des Produktionsweges (32) beweglich sind, sicherzustellen, wobei der Beschickungsfinger (52) in der aktiven Position das Durchlaufen der Hohlkörper (12), welche sich unmittelbar stromaufwärts des Beschickungsfingers (52) in der Reihe (36) zur Pufferung befinden, blockiert.

5. Anlage (10) zur Herstellung nach einem der Ansprüche 1 bis 3, **dadurch gekennzeichnet, dass** das Regelungsorgan von einem Auswurfarm (54) gebildet wird, welcher an einem Abschnitt des Produktionsweges (32) angeordnet ist, in welchem die Hohlkörper (12) von Einzelhalteorganen (46) einzeln gehalten werden, die entlang des Produktionsweges (32) beweglich angeordnet sind, wobei der Auswurfarm (54) eine Rampe (68) aufweist, die es ermöglicht, die Hohlkörper aus dem Produktionsweg (32) hinauszuführen, wenn er seine aktive Position einnimmt.

6. Verfahren zur Steuerung einer Anlage nach Anspruch 2, **dadurch gekennzeichnet, dass** die Anlage (10) dazu eingerichtet ist, Hohlkörper (12) verschiedener Formate aufzunehmen, wobei die inaktive Position in Abhängigkeit vom Format der Hohlkörper (12) zwischen den zwei Endpositionen so geregelt wird, dass das Regelungsorgan in der inaktiven Position in einem bestimmten Sicherheitsabstand (g) vom Produktionsweg (32) angeordnet ist.

7. Verfahren nach dem vorhergehenden Anspruch, **dadurch gekennzeichnet, dass** die inaktive Position durch Steuerung des elektrischen Linearmotors (56) geregelt wird.

8. Verfahren nach dem vorhergehenden Anspruch zur Steuerung einer Anlage nach Anspruch 4, **dadurch gekennzeichnet, dass** die aktive Position des Regelungsorgans, das von dem Beschickungsfinger (52) gebildet wird, in Abhängigkeit vom Format der Hohlkörper (12) so bestimmt wird, dass der Beschickungsfinger (52) tangential zwischen zwei aufeinander folgenden Hohlkörpern (12) der Reihe (36) zur Pufferung aufgenommen wird.

9. Verfahren nach dem vorhergehenden Anspruch, **dadurch gekennzeichnet, dass** die Verschiebungsgeschwindigkeit des Beschickungsfingers (52) zwischen seiner inaktiven Position und seiner aktiven Position so gesteuert wird, dass er jeden Hohlkörper (12) in einem Abstand umgeht, der kleiner oder gleich dem Sicherheitsabstand (g) ist, der während seines Durchlaufs in der Reihe (36) zur Pufferung bestimmt wird.

10. Verfahren nach einem der Ansprüche 6 oder 9, **dadurch gekennzeichnet, dass** die aktive Position der ausgefahrenen Endposition des Regelungsorgans entspricht.

11. Verfahren nach einem der Ansprüche 6 bis 10 zur Steuerung einer Anlage nach Anspruch 4, **dadurch gekennzeichnet, dass** der elektrische Linearmotor (56) in Abhängigkeit von der Durchlaufgeschwindigkeit der Einzelhalteorgane (38) gesteuert wird, die sich unmittelbar stromabwärts der Reihe (36) zur Pufferung befinden.

12. Verfahren nach einem der Ansprüche 6 bis 10 zur Steuerung einer Anlage nach Anspruch 5, **dadurch gekennzeichnet, dass** der elektrische Linearmotor (56) in Abhängigkeit von der Position und der Durchlaufgeschwindigkeit der Einzelhalteorgane (48) gesteuert wird, welche die Hohlkörper (12) tragen.

## Claims

1. Installation (10) for manufacturing containers by forming preforms made of thermoplastic material, the containers and the preforms being designated by the general term "hollow bodies (12)", the installation (10) comprising:
- means for transporting the hollow bodies (12) in line along a determined production path (32);
- at least one member for regulating the circulation of the hollow bodies (12) that is mounted such it can slide between an inactive position in which the regulating member is retracted out of the production path (32), and an active position in which the regulating member is interposed in the production path (32);
**characterized in that** the regulating member is moved to slide by a linear electric motor (56) comprising a slide (58) mounted such that it can slide in a stator (60).

2. Manufacturing installation (10) according to the preceding claim, **characterized in that** the slide (58) is capable of sliding between a retracted end position and an extended end position, the inactive position being adjustable between the retracted end position and the extended end position.

3. Manufacturing installation (10) according to either one of the preceding claims, **characterized in that** the regulating member is supported fixedly by the slide (58) of the linear electric motor (56).

4. Manufacturing installation (10) according to any one of the preceding claims, **characterized in that** the regulating member is a loading finger (52) which is arranged at a section of the production path (32) in which the hollow bodies (12) are received in an accumulation line (36) in order to ensure the individual distribution of each hollow body (12) downstream to individual-retention members (38) movable along the production path (32), the loading finger (52) in the active position blocking the travel of the hollow bodies (12) which are situated directly upstream of the loading finger (52) in the accumulation line (36).

5. Manufacturing installation (10) according to any one of Claims 1 to 3, **characterized in that** the regulating member is formed by an ejection blade (54) which is arranged at a section of the production path (32) in which the hollow bodies (12) are individually retained by individual-retention members (46) mounted movably along the production path (32), the ejection blade (54) having a ramp (64) making it possible to guide the hollow bodies out of the production path (32) when it occupies its active position.

6. Method for controlling an installation according to Claim 2, **characterized in that** the installation (10) is capable of receiving hollow bodies (12) of various formats, the inactive position being adjusted according to the format of the hollow bodies (12) between the two end positions so that the regulating member is arranged at a determined clearance distance (g) from the production path (32) in said inactive position.

7. Method according to the preceding claim, **characterized in that** the inactive position is adjusted by control of the linear electric motor (56) .

8. Method according to the preceding claim for the control of an installation according to Claim 4, **characterized in that** the active position of the regulating member, formed by the loading finger (52), is determined according to the format of the hollow bodies (12) so that the loading finger (52) is received tangent between two successive hollow bodies (12) of the accumulation line (36).

9. Method according to the preceding claim, **characterized in that** the sliding speed of the loading finger (52) between its inactive position and its active position is controlled in such a way as to bypass each hollow body (12) at a distance less than or equal to the determined clearance distance (g) during its travel in the accumulation line (36).

10. Method according to either one of Claims 6 and 9, **characterized in that** the active position corresponds to the extended end position of the regulating member.

11. Method according to any one of Claims 6 to 10 for the control of an installation according to Claim 4, **characterized in that** the linear electric motor (52) is controlled according to the speed of travel of the individual-retention members (38) situated directly downstream of the accumulation line (36).

12. Method according to any one of Claims 6 to 10 for the control of an installation according to Claim 5, **characterized in that** the linear electric motor (56) is controlled according to the position and the speed of travel of the individual-retention members (48) bearing the hollow bodies (12).
